**Europäisches Patentamt**

**European Patent Office**

**Office européen des brevets**

(11) Veröffentlichungsnummer: **0 301 290 B1**

(12) **EUROPÄISCHE PATENTSCHRIFT**

(45) Veröffentlichungstag der Patentschrift: **11.12.91**

(51) Int. Cl.⁵: **G01J 5/52**, G01J 3/10, H05B 3/26

(21) Anmeldenummer: **88110882.3**

(22) Anmeldetag: **07.07.88**

(54) **Schwarzer Strahler zum Einsatz als Emitter in eichbare Gassensoren und Verfahren zu seiner Herstellung.**

(30) Priorität: **31.07.87 DE 3725501**

(43) Veröffentlichungstag der Anmeldung:
**01.02.89 Patentblatt 89/05**

(45) Bekanntmachung des Hinweises auf die
Patenterteilung:
**11.12.91 Patentblatt 91/50**

(84) Benannte Vertragsstaaten:
**AT BE CH DE FR GB IT LI NL SE**

(56) Entgegenhaltungen:
**EP-A- 0 177 724**
**DE-A- 3 527 857**
**DE-B- 1 123 841**

(73) Patentinhaber: **SIEMENS AKTIENGESELL-
SCHAFT
Wittelsbacherplatz 2
W-8000 München 2(DE)**

(72) Erfinder: **Lehmann, Volker, Dipl.-Ing.
Neumarkter Strasse 82a
W-8000 München 80(DE)**
Erfinder: **Föll, Helmut, Dr.
Wemdinger Strasse 40
W-8000 München 80(DE)**

**Beschreibung**

Die Erfindung betrifft einen schwarzen Strahler mit einstellbarer Temperatur zum Einsatz als Emitter in eichbare Gassensoren.

Aus der EP-A-0 177 724 ist ein Infrarot-Strahler bekannt, bei dem auf einem Trägersubstrat aus Silizium eine mäanderförmige Leiterbahn als Heizwendel aufgebracht ist. Die Leiterbahn ist mit einer Substanz aus Siliziumdioxid zur Emission der Infrarot-Strahlung bedeckt. Dieser Strahler kann bei der optischen Gasanalyse verwendet werden, da die Strahlungsintensität direkt modulierbar ist, und die Wahl der infrarot-aktiven Substanz unter den Gesichtspunkten eines optimalen Strahlers erfolgt. Völlig befriedigende Ergebnisse bei eichbaren Gassensoren, die die vom zu untersuchenden Gas absorbierten Strahlungsanteile bestimmen sollen, setzten jedoch einen schwarzen Strahler als Emitter mit tatsächlich optimal und auf einfache Weise einstellbarer Strahlungsdichte voraus.

Aufgabe der Erfindung, ist einen kostengünstig herstellbaren, möglichst idealen schwarzen Strahler anzugeben, dessen Temperatur sich auf einfache Weise einstellen läßt und der als Emitter in eichbare Gassensoren einsetzbar ist.

Zur Lösung der Aufgabe wird ein schwarzer Strahler der eingangs genannten Art vorgeschlagen, der gekennzeichnet ist durch
a) einen dotierten kristallinen Siliziumkörper mit wabenzelliger Oberfläche und
b) eine regelbare elektrische Heizvorrichtung, mit der der Siliziumkörper erwärmt werden kann.

Eine besonders vorteilhafte Form der Erfindung ist dadurch gekennzeichnet, daß die Heizvorrichtung eine Heizwendel aufweist, die als eine im Vergleich zum Siliziumkörper entgegengesetzt dotierte Siliziumstruktur im Siliziumkörper hergestellt ist und an die eine regelbare Spannung angelegt ist.

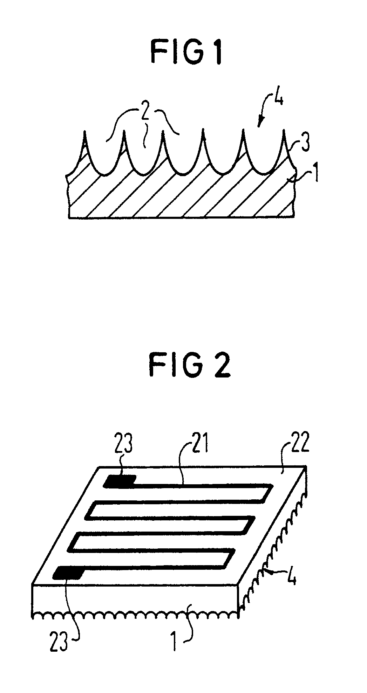

Weitere Ausgestaltungen und Weiterbildungen der Erfindung gehen aus den Unteransprüchen, sowie nachfolgend aus der, anhand eines Ausführungsbeispiels mit FIG 1 und FIG 2 gegebenen, Beschreibung hervor.

FIG 1    zeigt eine schematische Darstellung eines Schnittes eines Siliziumkörpers mit wabenzelliger Oberfläche.

FIG 2    zeigt schematisch einen erfindungsgemäßen schwarzen Strahler.

FIG 1: In einem kristallinen n-dotierten Siliziumstück 1 ist eine wabenzellige Oberfläche durch elektrolytisches Ätzen hergestellt. Die Wabengröße und damit die Emission kann durch Variation der Ätzparameter optimiert werden. Die Wabenzellen 2 haben eine Breite und Tiefe von ca. 10 bis 20 $\mu$m und die Wände 3 eine Dicke von ca. 2 bis 5 $\mu$m.

Das Siliziumstück 1 stellt einen sehr guten schwarzen Strahler dar. Bei Lichteinfall auf die wabenzellige Oberfläche 4 erfolgt innerhalb der Wabenzellen 2 eine vielfache Reflexion und dadurch praktisch eine totale Absorbtion von Licht aller Wellenlängen.

FIG 2: In den n-Siliziumstück 1 wurde durch Eindiffundieren von Dotierstoffen, zum Beispiel Bor, eine p-dotierte meanderförmige Siliziumstruktur 21 als Heizwendel erzeugt, die über die elektrischen Anschlüsse 23 an eine regelbare Gleichspannung (nicht in der Darstellung enthalten) angelegt ist. Eine Oberfläche 4 des n-Siliziumstücks 1 ist mit einer wabenzelligen Struktur versehen. Wenn die p-dotierte Siliziumstruktur 21 stromdurchflossen wird, heizt sich das n-Siliziumstück 1 auf. Die wabenzellige Oberfläche 4 emittiert dann eine Strahlung, wie sie für einen schwarzen Strahler charakteristisch ist. Durch Regelung des Stromflusses ist die Temperatur des n-Siliziumstücks und damit die Strahlungsdichte einstellbar.

**Patentansprüche**

1. Schwarzer Strahler mit einstellbarer Temperatur zum Einsatz als Emitter in eichbare Gassensoren,
   a) mit einem dotierten kristallinen Siliziumkörper (1) mit wabenzelliger Oberfläche (4) und
   b) mit einer regelbaren elektrischen Heizvorrichtung, mit der der Siliziumkörper (1) erwärmt werden kann.

2. Schwarzer Strahler nach Anspruch 1, dadurch **gekennzeichnet,** daß die Heizvorrichtung eine Heizwendel (21) aufweist, die als eine im Vergleich zum Siliziumkörper (1) entgegengesetzt dotierte Siliziumstruktur im Siliziumkörper (1) hergestellt ist und an die eine regelbare Spannung angelegt ist.

3. Schwarzer Strahler nach Anspruch 1 oder 2, dadurch **gekennzeichnet,** daß die Heizwendel (21) auf der der wabenzelligen Oberfläche (4) gegenüberliegenden Oberfläche (22) aufgebracht ist.

4. Schwarzer Strahler nach einem der Ansprüche 1 bis 3, dadurch **gekennzeichnet,** daß die wabenzellige Oberfläche (4) durch elektrolytisches Ätzen erzeugt ist.

5. Verfahren zur Herstellung eines schwarzen Strahlers nach Anspruch 1, dadurch **gekennzeichnet,** daß ein Siliziumkörper (1) mit wabenzelliger Oberfläche (4) aus einem kristallinen n-Siliziumkörper mittels eines elektrolytischen Ätzverfahrens hergestellt wird.

6. Verfahren zur Herstellung eines schwarzen Strahlers nach Anspruch 2, dadurch **gekennzeichnet,** daß die entgegengesetzt dotierte Siliziumstruktur durch Einbringen von Dotierstoffen auf der der wabenzelligen Oberfläche (4) gegenüberliegenden Oberfläche (22) des Silziumkörpers (1) hergestellt wird.

## Claims

1. Blackbody radiator having adjustable temperature for use as an emitter in calibratable gas sensors,
    a) comprising a doped crystalline silicon member (1) having a honeycombed surface (4) and
    b) comprising a controllable electrical heating device by means of which the silicon member (1) can be heated.

2. Blackbody radiator according to Claim 1, characterised in that the heating device has a heating coil (21), which is produced as a silicon structure in the silicon member (1) that is oppositely doped by comparison with the silicon member (1) and to which a controllable voltage is connected.

3. Blackbody radiator, according to Claim 1 or 2, characterised in that the heating coil (21) is applied to the surface (22) opposite the honeycombed surface (4).

4. Blackbody radiator according to one of Claims 1 to 3, characterised in that the honeycombed surface (4) is produced by electrolytic etching.

5. Method for producing a blackbody radiator according to Claim 1, characterised in that a silicon member (1) having a honeycombed surface (4) is produced from a crystalline n-silicon member by means of an electrolytic etching process.

6. Method of producing a blackbody radiator according to Claim 2, characterised in that the oppositely doped silicon structure is produced by introducing dopants on the surface (22) of the silicon member (1) opposite the honeycombed surface (4).

## Revendications

1. Corps rayonnant noir possédant une température réglable et destiné à être utilisé en tant qu'émetteur dans des détecteurs de gaz pouvant être étalonnés, comportant
    a) un corps en silicium cristallin dopé (1) possédant une surface en nid d'abeilles (4), et
    b) un dispositif de chauffage électrique réglable, avec lequel on peut chauffer le corps en silicium (1).

2. Corps rayonnant noir suivant la revendication 1, caractérisé par le fait que le dispositif de chauffage possède un filament de chauffage (21), réalisé sous la forme d'une structure de silicium possédant un dopage opposé à celui du corps en silicium (1), dans ce corps, et auquel est appliquée une tension réglable.

3. Corps rayonnant noir suivant la revendication 1 ou 2, caractérisé par le fait que le filament de chauffage (21) est disposé sur la surface (22) située à l'opposé de la surface en nid d'abeilles (4).

4. Corps rayonnant noir suivant l'une des revendications 1 à 3, caractérisé par le fait que la surface en nid d'abeilles (4) est produite par corrosion électrolytique.

5. Procédé pour fabriquer un corps rayonnant noir suivant la revendication 1, caractérisé par le fait qu'on fabrique un corps en silicium (1) possédant une surface en nid d'abeilles (4) à partir d'un corps en silicium cristallin de type n, au moyen d'un procédé de corrosion électrolytique.

6. Procédé pour fabriquer un corps rayonnant noir suivant la revendication 2, caractérisé par le fait qu'on fabrique la structure de silicium possédant le dopage opposé, en introduisant des substances dopantes dans la surface (22) du corps en silicium (1), située à l'opposé de la surface en nid d'abeilles (4).

# FIG 1

# FIG 2